# EUROPEAN PATENT SPECIFICATION

(11) **EP 0 890 516 B1**
(45) Date of publication and mention of the grant of the patent: **21.04.2004**
(21) Application number: 98305297.8
(22) Date of filing: 03.07.1998
(51) Int. Cl.: B65B 51/30, B65B 9/12, B29C 65/00

(54) **Heat sealing method and device for packaging container production**
Verfahren und Vorrichtung zum Thermoschweissen für die Herstellung von Verpackungsbehältern
Proçédé et dispositif de thermoscellage pour la fabrication de récipients d'emballage

(30) Priority: 09.07.1997 JP 18328597
(43) Date of publication of application: 13.01.1999
(73) Proprietor: Shikoku Kakoki Co Ltd, Tokushima-ken (JP)
(72) Inventor: Katayama, Hiroshi, c/o Shikoku Kakoki Co., Ltd., Itano-gun, Tokushima-ken (JP); Fujimoto, Akimasa, c/o Shikoku Kakoki Co., Ltd., Itano-gun, Tokushima-ken (JP); Yamamoto, Hidekimi, c/o Shikoku Kakoki Co., Ltd., Itano-gun, Tokushima-ken (JP); Ueda, Michio, c/o Shikoku Kakoki Co., Ltd., Itano-gun, Tokushima-ken (JP)
(74) Representative: Allen, Philippa Margaret

(56) References cited:
- EP-A- 0 602 000
- US-A- 5 678 390

## Description

### Field of the invention

The present invention relates to a packaging container producing method and equipment, and in particular relates to a packaging container producing method and equipment by which a plate-like web is molded into a tubular web and a filling liquid such as a fluid food is filled in the tubular web.

### Description of the related art

A plate-like web wound like a roll is moved while being continuously unwound, in order to gradually mold it to be tubular, the web is continuously adhered at the position where both ends thereof in the direction orthogonal to the lengthwise direction of the web slightly overlap, and a filling liquid such as a fluid food is filled therein. In order to continuously form packaging containers in which the filling liquid is fully filled, the packaging containers are enclosed below the level of the filling liquid and are sealed (cross sealed) in the direction orthogonal to the web lengthwise direction. Thereafter, nearly the central portion of the abovementioned cross-sealed part in its width direction is cut off. That is, by repeating a series of these operations, a liquid filling packaging container is formed, wherein finally, a parallel-hexahedral container is produced.

When filling a filling liquid such as fluid food into a web, two pairs of sealing jaws 2 are provided, which cross seal a web in such a state that the web is pressed from both sides thereof, and the tubular web being transferred downward is put and nipped between the respective pairs of sealing jaws which move along with the web while pulling the web W. After the sealing jaws shift down an appointed distance, nearly the central portion of the cross-sealing part is cut off as described above, and simultaneously the sealing state of the web W is opened to cancel the downward transferring force of the tubular web, wherein the sealing jaws are caused to move in a direction of being spaced from each other, and elevated an appointed distance, and the processes of a sealing operation of a tubular web are repeated.

A tubular web is composed of a multi-layered structure consisting of polyethylene film layer, adhesive glue layer, aluminium foil layer, paper layer, and polyethylene film layer from the inside in that order. The cross sealing of the tubular web is carried out by heating and melting the polyethylene film layer using the abovementioned pair of sealing jaws.

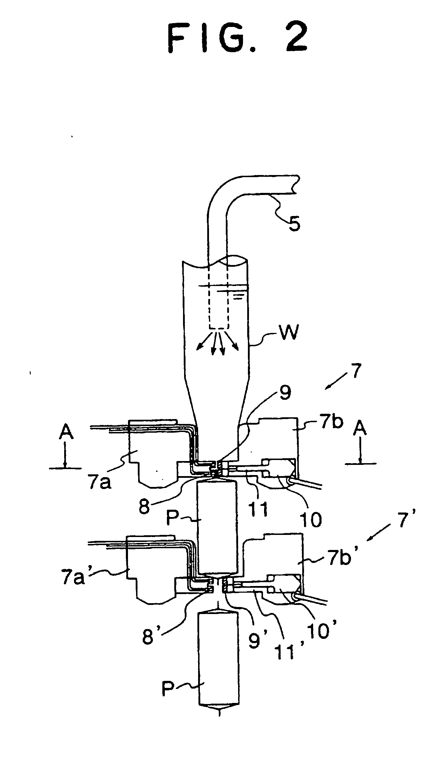

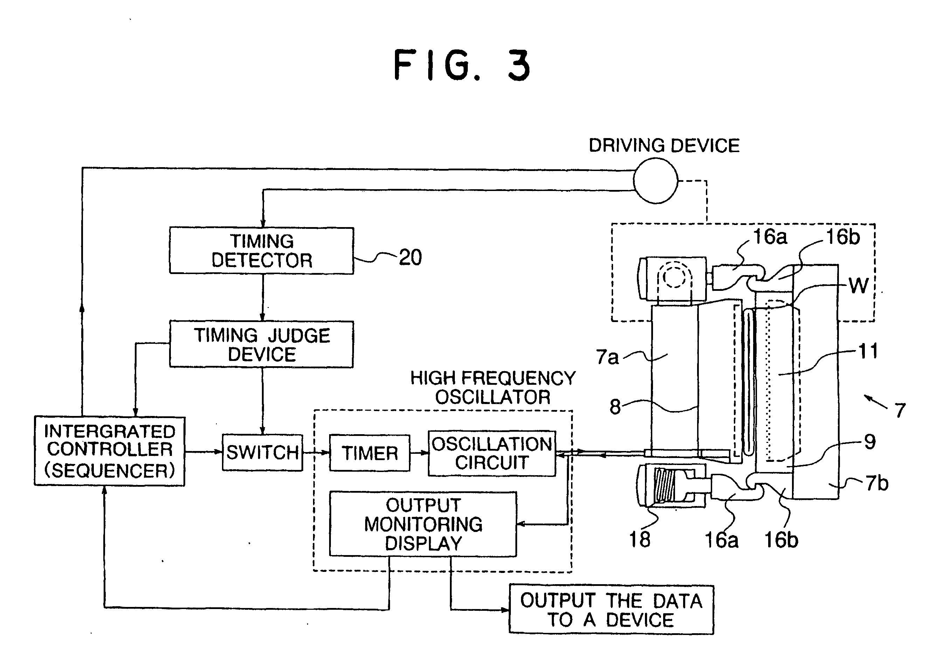

A pair of sealing jaws consists of, for example, as shown in FIG.2 and FIG.3, a heat sealing jaw 7a for heat-sealing, and a pressure receiving jaw 7b to receive a compression force from the heat sealing jaw 7a (although, in FIG.2, there is a pair of heat sealing jaw 7a and a pressure receiving jaw 7b, and there is a pair of a heat sealing jaw 7a' and a pressure receiving jaw 7b', hereinafter the description deals with only the pair of heat sealing jaw 7a and pressure receiving jaw 7b), an inductor 8 is provided at the contacting portion of the heat sealing jaw 7a with the web surface, and a pressure receiving bar 9 and a cutter 11, which cuts off the middle portion of the cross-sealed part in the width direction, are secured at the contacting portion of the pressure receiving jaw 7b with the web W. Furthermore, a hook 16a and a hook 16b are provided at both ends of the heat sealing jaw 7a and pressure receiving jaw 7b, respectively, wherein the hook 16a of the heat sealing jaw 7a is engaged with the hook 16b of the pressure receiving jaw 7b, and the engaging force in the cross sealing of web W nipped between the inductor 8 and pressure receiving bar 9 is controlled by adjusting the working oil pressure of a liquid pressure cylinder 18 of the hook 16a.

Subsequently, an eddy current is caused to flow to the aluminium foil of web W by the inductor 8 of the heat seal jaw 7a when both sides of the web are pressed by the heat seal jaw 7a and pressure receiving jaw 7b of a pair of seal jaws 7, wherein heat is generated by induction heating. With this heat, the polyethylene film layer is melted to cause the web W to be cross-sealed.

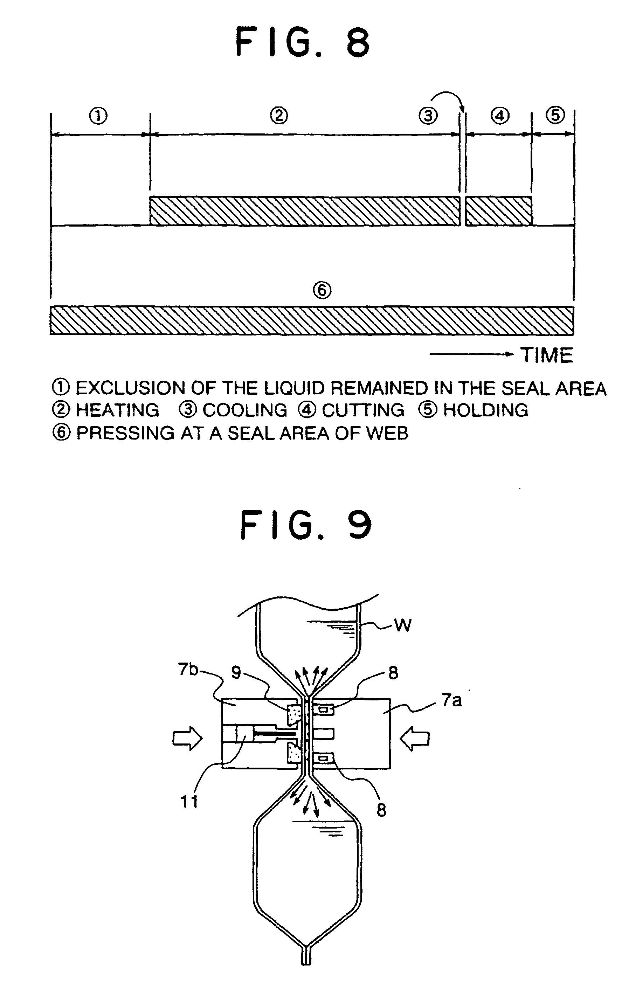

The cross sealing of web W is carried out by the following six processes as shown in FIG.8.
(1) Exclusion of the filled liquid below the level in the web W
(2) Heating at an appointed output for an appointed duration of time from the outside of web W
(3) Cooling of the web W
(4) Cutting at the cross-sealed portion (Separation of pillow-like containers)
(5) Holding of the web
(6) Pressing at an appointed level of pressure for an appointed duration of time

Although the web W is cross-sealed by the abovementioned six processes, as shown in FIG.8, the pressing process in (6) is carried out to press the web W throughout processes (1) through (5).

As shown in FIG.9, (1) exclusion of the filled liquid in the web at the abovementioned cross-sealing portion is a process for excluding the filled liquid remaining in the cross-sealing portion inside the web W when the heat seal jaw 7a and pressure receiving jaw 7b press both sides of web W.

The output value of the heating energy ensured by electric energy obtained from a heating means such as an inductor 8 in the cycles (1) through (6) of the abovementioned cross sealing process is varied to an adequate value in compliance with the quality of liquid to be filled, and the operation is carried out in compliance with the output values determined after checking the sealed state of packaging containers. In most cases, the abovementioned cycles (1) through (6) are carried out in a very short time 1 second or less, per hexahedral packaging container which is a final product.

With respect to the process for cross sealing below the level of the liquid, which is carried out in a very short time 1 second or less per packaging container, it was not possible to detect, in real time, whether or not each operation is carried out in a reliable state.

### SUMMARY OF THE INVENTION

Therefore, a theme of the invention is to detect, in real time, occurrence of defective sealing due to overheating or shortage of heating, and to easily search for the cause of any abnormal occurrences from various kinds of observed data stored in the memory, by monitoring each of the output values, operation time and operation timing pertaining to electric power generated so as to be converted to heating energy in a cross sealing of a web below the level of liquid.

Furthermore, it is therefore an object of the invention to provide packaging container producing equipment which is able to monitor the output state of the seal heating means so that the cross sealing of web can be sufficiently carried out.

The abovementioned themes of the invention can be solved by the following construction.

That is, the invention provides a packaging container producing equipment for producing packaging containers, comprising the steps of molding a plate-like web into a tubular web, filling fluid filling liquid into said tubular web, and enclosing and sealing the side of the tubular web positioned below the level of the filled liquid, and cutting off the enclosed and sealed portion thereof; wherein the degree of said enclosed and sealed state of web is observed by monitoring the values pertaining to heating energy to enclose and seal the side of the tubular web positioned below the level of said filled liquid, and simultaneously storing the values pertaining to said heating energy equivalent to an appointed number of times of enclosing and sealing operations of the tubular web.

Furthermore, the invention provides packaging container producing equipment for producing packaging containers, which is provided with a compressing means for molding a plate-like web into a tubular web, filling fluid fitting liquid into said tubular web, and for enclosing and sealing the sides of the tubular web positioned below the level of the filled liquid, and a cutting means for cutting off the enclosed and sealed portion thereof, comprising: an output monitoring means of said compressing means for monitoring values pertaining to the heating energy to enclose and seal the side of the tubular web positioned below the level of the filled liquid, and a memory means for storing values pertaining to said heating energy equivalent to an appointed number of enclosing and sealing operations of the tubular web.

In the abovementioned packaging container producing method and equipment according to the invention, the monitoring of values pertaining to heating energy can be facilitated by executing the output to a monitor display. Furthermore, in a case where the history of the values pertaining to the heating energy, equivalent to an appointed number of times of the past sealing operations thereof is recorded and stored, it will be useful in controlling of the timing of generation of defective products and in searching for causes thereof.

Furthermore, in the packaging container producing method and equipment according to the invention, in a case where the heating energy depends upon high frequency induction heating, the output values of the peak current value, mean current value, current supplying time, heating output integration value (the square of the mean current value multiplied by the current supplying time), interval of the current supplying time, and voltage value are monitored as values pertaining to the heating energy.

The sealing property of web W by, for example, high frequency induction heating, can not be maintained in a favorable state unless the peak current value, mean current value, heating time, heating output integration value, interval of the heating time, and voltage value are the same as the set values. That is, if even one of the abovementioned values slips from the preset value, web W having a defective cross sealing is produced.

Since, in the invention, the upper and lower limits are set for all the values pertaining to the heating energy of web W, it is favorable that these values exist in the range of the set values. Furthermore, if these values come off from the range (the upper or lower limit), it is highly recommended that alarm is issued or the operation of the equipment is automatically stopped.

In a case where a high frequency induction heating device is used as a heating device for cross sealing of the web W, the heating time is determined to carry out oscillations in the duration of time determined by a high frequency oscillation instruction, and the non-heating time is determined so that the oscillation is not carried out in the predetermined duration of time. Furthermore the heating output is determined in advance according to the material of web W, and the type of contents to be filled in the web W, wherein since the cross sealing of web W is carried out by carrying out oscillation of the inductor in compliance with a folding action of web W by a pair of sealing jaws, it is necessary that the heating time is preset so as to correspond to the folding action of the pair of sealing jaws.

Thus, by placing all of the peak current value, mean current value, current supplying time, heating output integration value (the square of the mean current value multiplied by current supplying time), interval of current supplying time and voltage value in the range of the preset values, the reliability of the cross sealing of web W can be assured, and it is possible to eliminate defective products in the final packaging container.

The present invention is applicable to not only production of hexahedral packaging containers but also production of gable-top packaging containers.

The invention is also applicable to sealing webs such as plastic products.

### BRIEF DESCRIPTION OF THE DRAWINGS

The above and other advantages of the invention will become more apparent from the following description taken in conjunction with the accompanying drawings wherein like reference numerals refer to like parts and wherein:
FIG.1 is a sketch of packaging container producing equipment for producing packaging containers, in which contents are filled, from a plate-like web according to a preferred embodiment of the invention,
FIG.2 is a side elevational view of the sealing jaw portion, consisting of two pairs, of the packaging container producing equipment in FIG.1,
FIG.3 is a view taken along the line A-A in FIG.2 and an operation controlling view of a high frequency induction heating system of the sealing jaw portion,
FIG.4 is a drive timing chart of the sealing jaws in FIG.2,
FIG.5 is an explanatory view of operation abnormality of the high frequency induction heating system of the sealing jaw portion in FIG.2,
FIG.6 is another explanatory view of operation abnormality of the high frequency induction heating system of the sealing jaw portion in FIG.2,
FIG.7 is a timing chart of the output waveforms of high frequency oscillation current of the sealing jaw portion in FIG.2,
FIG.8 is a timing chart of cross sealing of a web by the sealing jaws of the packaging container producing equipment, and
FIG.9 is a view showing a state where the filled liquid is excluded in a cross sealing of a web by the sealing jaws of the packaging container producing equipment.

### DETAILED DESCRIPTION OF THE PREFERRED EMBODIMENTS

A description is given of preferred embodiments of the invention.

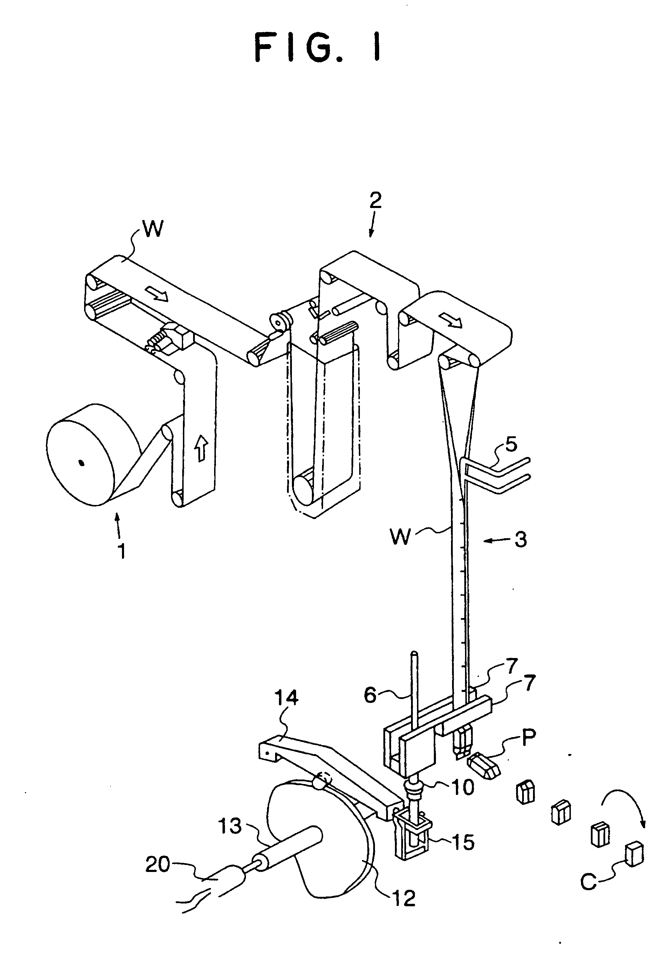

FIG.1 is a brief perspective view of packaging container producing equipment according to one preferred embodiment of the invention, FIG.2 is a side elevational view of two pairs of sealing jaws 7 in operation, which are in operation, used for the packaging container producing equipment in FIG.1, and FIG. 3 shows a view taken along the line A-A in FIG. 2, of a control mechanism of a heating means of sealing jaws 7.

Packaging container producing equipment according to the abovementioned preferred embodiment is a packaging container producing apparatus for producing packaging containers, in which liquid contents are filled, from web W. As shown in FIG.1, a plate-like web wound to be roll-like is used to form a tubular web W, wherein both ends of the abovementioned tubular web W are sealed (longitudinal sealing) in a longitudinal direction, contents are filled therein, and the tubular web W is cut off to a length equivalent to one packaging container, thereby making a pillow-like container P in which contents is filled. This is then made into a hexahedral packaging container C which is one of the final products.

In the abovementioned packaging container producing equipment, a roll-like web W of rewinder 1 is unwound, the plate-like web unwound is transferred to a tube forming device 3 via a tension applying device 2 by which tension is always given to the corresponding web W, wherein the plate-like web is deformed to be tubular web W while being formed, the overlapped ends of the tubular web W in the web W flowing direction are sealed to each other, and the tubular web W is deformed to be a square column like web W by a molding member (not illustrated) and is cut off by a cutter (not illustrated), wherein the web W is cut so as to finally make packaging containers P.

The tube forming device 3 is provided with a filling pipe 5 for filling a filling liquid such as fluid food into a tube. Furthermore, the tube forming device 3 is also provided with two pairs of sealing jaws 7 (only one pair of sealing jaws is shown in FIG.1) to seal (cross seal) web W by pressing both sides of the web W, wherein one pair of sealing jaws is caused to move along with the web W while pulling downward the tubular web W being transferred downward, and the sealing state of the web W is released after the same sealing jaws fall an appointed distance. Thereafter, each of them is caused to move in mutually separating directions. The sealing jaws are elevated an appointed distance, wherein the processes of sealing the tubular web W are repeated.

The drive of the pair of sealing jaws 7 is constituted to be movable vertically by a perpendicularly movable spline shaft 6. A cam 12 which constitutes a drive mechanism for causing the sealing jaws 7 to be elevated is connected to a cam follower 14 which is elevated and lowered along the side of the cam 12 via a connecting member 15 on the upper surface of the cam 12.

With the side of the tubular web W pressed by a pair of sealing jaws 7, the polyethylene film layer of the web W is melted by a heating member incorporated in the corresponding sealing jaws 7 so that the sides of the web W to be pressure-fit are caused to be integrated with each other, thereby performing a cross sealing.

As shown in FIG.2, the sealing jaw 7 for cross sealing the web W consists of two pairs of sealing jaws 7, 7', and each pair of sealing jaws 7, 7' consists of heat sealing jaws 7a, 7a' for heat-sealing the web W and pressure receiving jaws 7b, 7b' to receive a compression force from the corresponding heat sealing jaws 7a, 7a'. Inductors 8, 8' are provided at the engaging portion of the heat-sealing jaws 7a, 7a' with the web W surface. Furthermore, pressure receiving bars 9, 9' and cutter 10, 10' are, respectively, secured at the engaging portion of the pressure receiving jaws 7b, 7b' with the web W. Each pair of sealing jaws 7, 7' is caused to move while pulling downward while the web W being transferred downward, simultaneously with a sealing operation of the web W, and in this process, the tubular web W is deformed into a square column like web W by forming flaps (not illustrated). However, when a pair of sealing jaws 7, 7' descends an appointed distance, cutters 11, 11' driven by the cylinders 10, 10' provided in the pressure receiving jaws 7b, 7b' cut off at nearly the middle part of the cross-sealed portion of the web W.

The sealed state of the web W by the sealing jaws 7, 7' is released by the cutters 11, 11'. Pillow-like container P is cut off, and simultaneously the downward transferring force of the square column like web W is cancelled, wherein the sealing jaws 7, 7' are caused to move in, mutually, separate directions, are elevated an appointed distance and then repeat a sealing operation of the tubular web W.

Furthermore, FIG.3 is a view taken along the line A-A in FIG.2 and shows a pair of sealing jaws 7. A pair of hooks 16a, 16b is provided at both ends of the heat sealing jaw 7a and pressure receiving jaw 7b, and a cylinder 18 is connected to the hook 16a. And after the hook 16a and the hook 16b are engaged with each other as shown in FIG. 3, the heat sealing jaw 7a and pressure receiving jaw 7b are caused to be drawn near each other by operation of the cylinder 18, whereby the web W nipped between the inductor 8 and the pressure receiving bar 9 is sufficiently pressed when being cross-sealed. Although not illustrated, when the cross sealing and cutting of web W are finished by a pair of sealing jaws 7 and the pair of sealing jaw 7 are separated from each other, the engagement of a pair of hooks 16a and 16b is cancelled.

Since an eddy current is caused to flow to the aluminium foil of the web W by the inductor 8 of the heat sealing jaw 7a when the heat sealing jaw 7a and pressure receiving jaw 7b press both sides of the web W by engagement of the hook 16a and hook 16b, the aluminium foil is self-heated, and this heat melts the polyethylene film layer of the web W to cross-seal the web W.

A high frequency induction heating system for this cross sealing is illustrated in FIG.3. The tube forming device 3 (FIG.1) forms a plate-like web W to a tubular web W, and the tubular web W is cross-sealed since the drive device (main shaft 13, etc.) for driving the sealing jaws, which is to fold the web W from both its sides, drives the sealing jaws 7 secured at the spline shaft 6, which is described above and shown in FIG.1. At this time, the drive amount (the rotating angle, etc. of the main shaft 13) of the drive device is detected by a timing detector (encoder) 20, wherein if a timing judgment device (rotating angle detector) judges that the detected angle is an appointed rotating angle, the corresponding rotating angle judgement signal is outputted to a sequencer (integrated controller) and a switch, thereby outputting an oscillation instruction of the sequencer. If both rotating angle judgement signal and an oscillation instruction from the sequencer are outputted to the switch, an oscillation circuit operates for an appointed duration of time controlled by a timer incorporated in the high frequency oscillator to cause a high frequency current to flow to the inductor 8. At this time, since the high frequency oscillator incorporates an output monitoring display, it is possible to output data from the output monitoring display to any peripheral device.

The abovementioned output monitoring display has a feature which judges whether or not each of the output value data is an adequate value. If any abnormal data is generated, a signal is outputted to the sequencer to cause the drive device to stop. Furthermore, the abovementioned output monitoring display has a memory feature to store each of the output value data, and the memory has a capacity which can store the oscillation state of a high frequency oscillator of packaging containers C being final products equivalent to an appointed number of times of operations, for example, 50 to 100 products. Therefore, even in a case where a defective product arises in packaging products C being the final products, the past data stored in the memory is taken out via the output monitoring display and taken under examination. Thereby, it is possible to find the timing of occurrence of defects of the high frequency oscillator and to search for the cause. Accordingly, not only can the yield of the production be improved, but also effective information obtained, by which such defective products can be prevented from occurring.

The items pertaining to the heating energy to be controlled by an output monitoring display are high frequency current value (the mean value of the detected current), peak DC value, output integration value [{Mean current value (I)}² multiplied by time (t)], current supplying time (oscillation time), interval time (between the current supplying time and current non-supplying time), voltage value, etc.

Accordingly, if each of the abovementioned output values exceeds the upper limit or does not reach the lower limit, an alarm is issued.

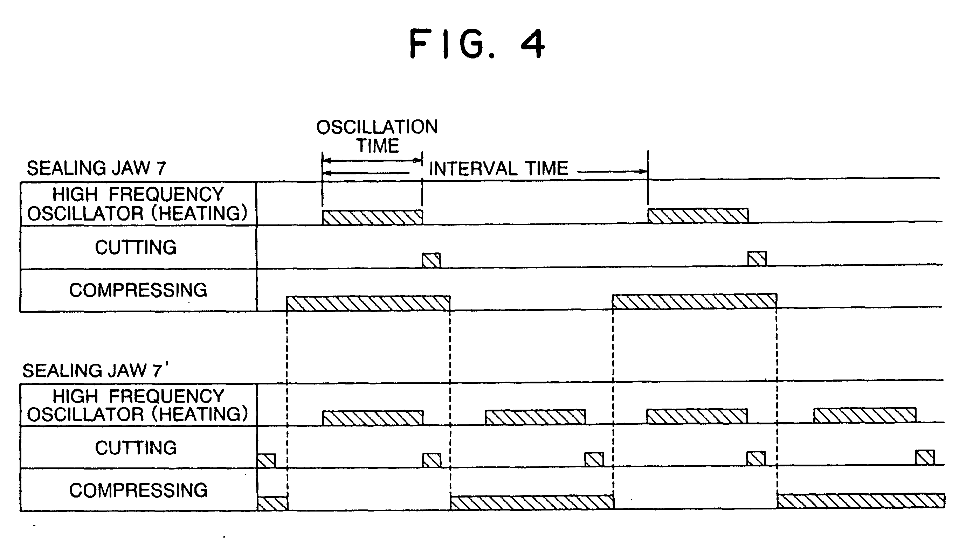

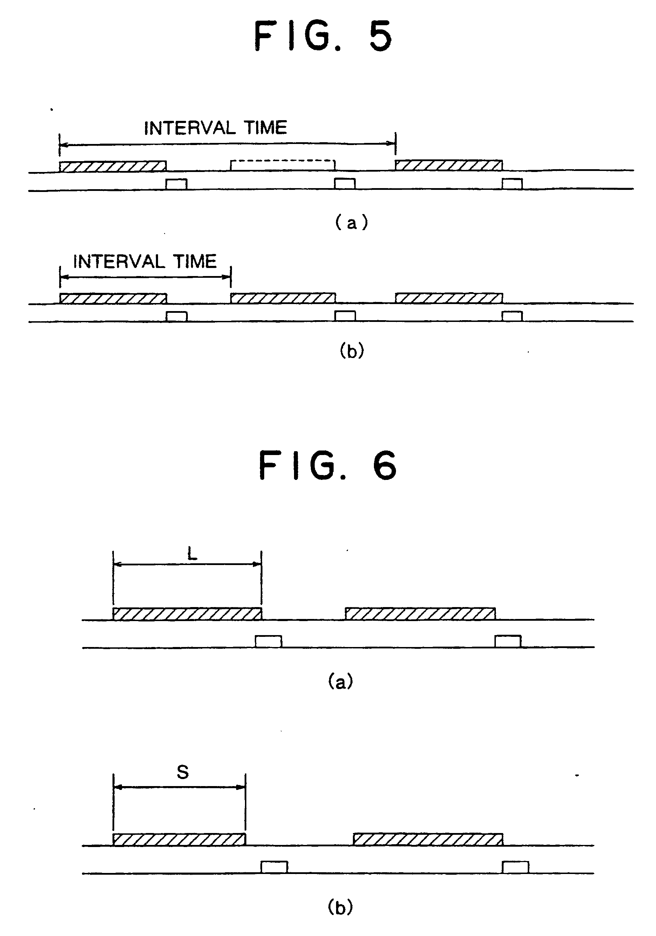

For example, FIG.4 shows timing charts of the high frequency oscillation (current supplying) time, and operations of cutting and compressing time of two pairs of sealing jaws 7, 7'. Two pairs of sealing jaws 7,7' alternately cross seal web W. FIG.5, FIG.6 and FIG.7 illustrate display examples on the monitoring display when any one of the abovementioned items controlled by the output monitoring display pertaining to the heating energy becomes abnormal.

FIG.5 shows an abnormal example of the interval time, in which (a) shows a state that a heating process of one packaging container C is omitted, and (b) shows that in the illustrated example, the initial interval time is too long, and the current supplying time of the second packaging container C overlaps with the cutting time.

Furthermore, FIG. 6 shows an abnormal example of the high frequency oscillation time (current supplying time), in which (a) shows a case where the oscillation time is too long and (b) shows a case where the time is too short. It is clear that the output integration value also becomes abnormal due to the abnormality of this high frequency oscillation time (current supplying time).

Actually, it is set that if each of the output values to be monitored in this embodiment, which is exemplarily illustrated in FIG.5 and FIG. 6, exceeds the upper limit or does not reach the lower limit (for example, ±5% of the set values), an alarm is issued.

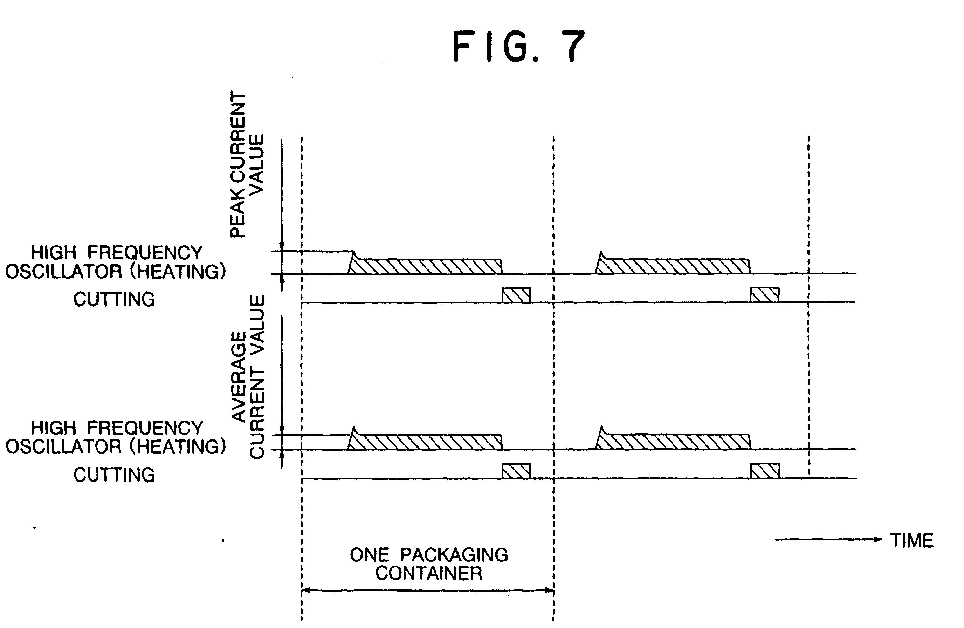

Furthermore, although the abnormalities of the current values are shown in FIG.7, there is a peak current value in the actual high frequency current as shown in FIG.7. FIG.4 illustrates the mean high frequency current values. It is set that, if each of these output values exceeds the upper limit or does not reach the lower limit (for example, ±5% of the preset values), any abnormality is judged to exist in the output values and an alarm is issued.

The cross sealing degree of web W depends on the oscillation energy of high frequency of the inductor 8. Conventionally, although only the instantaneous output values of the current and voltage values have been monitored to judge whether or not the inductor 8 is operating in a favorable state, in this preferred embodiment, various kinds of the abovementioned output values are monitored and all these output values are located in the range of the preset values, wherein the reliability of cross sealing of web W is assured, and no defective product occurs in the final packaging containers.

Furthermore, even if any abnormality arises, it is possible to easily search for the cause thereof since electric data to assure reliable cross sealing of web W can be stored in a memory.

### Summary

The invention provides a packaging container producing method and producing which is able to monitor the output state of a seal heating device so that sufficient cross sealing of a web can be secured. Sealing property of a tubular web by high frequency induction heating can not be maintained in a satisfactory state unless the the peak current value, mean current value, current supplying time, heating output integration value (the square of the mean current value multiplied by the current supplying time), interval of the current supplying time, and voltage value are as a preset value. The upper and lower limits are established with respect to all these values pertaining to the heating energy of a web, wherein if any one of these values exceeds the upper limit or does not reach the lower limit, an alarm is issued or the operation of the equipment is automatically stopped. Furthermore, the history of the values pertaining to the abovementioned heating energy, which covers an appointed number of times of the past sealing operations of a tubular web, is recorded and stored, wherein it is possible to control the point of time when any defective product is produced, or useful to search for the cause thereof. Thus, by locating the values pertaining to the abovementioned heating energy within the range of the set values, the sealing reliability of a web can be assured, and no defective product is produced in the final packaging containers.

## Claims

1. A web sealing method comprising the steps of sealing two portions of web (W) together by heating and melting both sides of a double web while pressing them **characterised in that** the degree of scaled state of the web (W) is observed by monitoring the values pertaining to heating energy to seal the web and, simultaneously, storing the values pertaining to said heating energy equivalent to an appointed number of times of sealing operations of the web.

2. A packaging container producing method for producing packaging containers (P), comprising the steps of molding a plate-like web (W) into tubular web, filling liquid or solid material into said tubular web, and enclosing and sealing the side of the tubular web positioned below the level of the filled material by applying the web sealing method of Claim 1, and cutting off the enclosed and sealed portion thereof.

3. A web sealing method as set forth in Claim 1 or a packaging container producing method as set forth in Claim 2, wherein in a case where the heating energy is produced by high frequency induction heating, the output values of the peak current value, mean current value, current supplying time, heating output integration value (the square of the mean current value multiplied by the current supplying time), interval of the current supplying time, and voltage value are monitored as values pertaining to the heating energy.

4. A web sealing method or packaging container producing method as set forth in any preceding claim, wherein various kinds of output values pertaining to the heating energy are adjusted so as to be within the preset range.

5. A web sealing device comprising a means (7) to seal two portions of a web (W) together by heating and melting both sides of a double web **characterised in that** it further comprises an output monitoring means of said sealing means for monitoring values pertaining to the heating energy to seal the web material and a memory means for storing values pertaining to said heating energy equivalent to an appointed number of sealing operations of the web.

6. A packaging container producing equipment for producing packaging containers (P), comprising a compressing means (3) for molding a plate-like web (W) into a tubular web, filling means (5) for material into said tubular web, and means for enclosing and sealing the side of the tubular web (7) positioned below the level of the filled material comprising a web sealing device in accordance with Claim 5, a cutting means (10) for cutting off the enclosed and sealed portion thereof, an output monitoring means of said compressing means for monitoring values pertaining to the heating energy to enclose and seal the side of the tubular web positioned below the level of the filled material.

7. A packaging container producing equipment as set forth in Claim 6, wherein a control device is provided, which adjusts said various kinds of output values pertaining to the heating energy on the basis of the output values of the output monitoring means for monitoring the values pertaining to heating energy to enclose and seal the sides of the tubular web, so that they are within or preset range.

8. A control system for a packaging container producing equipment as set forth in Claim 6 or 7, or web sealing device as set forth in Claim 5 comprising the output monitoring means and memory means; wherein a control device is provided, which adjusts said various kinds of output values pertaining to the heating energy on the basis of the output values of the output monitoring means for monitoring the values pertaining to heating energy to seal the web, so that they are within or preset range.

9. A packaging container obtained with the equipment of any of Claims 6 or 7 and/or the method of any of Claims 2 to 4.

## Patentansprüche

1. Bahnschweißverfahren, aufweisend die Schritte
Zusammenschweißen zweier Abschnitte einer Bahn (W) durch Erwärmen und Schmelzen beider Seiten einer Doppelbahn, während sie gedrückt werden, **dadurch gekennzeichnet, dass** der Grad des geschweißten Zustands der Bahn (W) durch Überwachen der Werte bezüglich Erwärmungsenergie zum Schweißen der Bahn überwacht wird und dass gleichzeitig die Werte bezüglich der Erwärmungsenergie, die einer bestimmten Anzahl von Schweißoperationen der Bahn entsprechen, gespeichert werden.

2. Verpackungsbehälter-Herstellungsverfahren zur Herstellung von Verpackungsbehältern (P), aufweisend die Schritte
Formen einer plattenähnlichen Bahn (W) zu einer röhrenförmigen Bahn, Füllen von flüssigem oder festem Material in die röhrenförmige Bahn und Einschließen und Schweißen der Seite der röhrenförmigen Bahn, positioniert unter dem Pegel des gefüllten Material, durch Anwenden des Bahnschweißverfahrens nach Anspruch 1 und Abschneiden des eingeschlossenem und geschweißtem Abschnitt hiervon.

3. Bahnschweißverfahren nach Anspruch 1 oder Verpackungsbehälter-Herstellungsverfahren nach Anspruch 2, bei dem, falls die Erwärmungsenergie durch Hochfrequenz-Induktionserwärmung erzeugt wird, die Ausgangswerte des Stromspitzenwerts, Strommittelwerts, Stromzufuhrzeit, Wärmeleistungs-Integrationswerts (Quadrat des Strommittelwerts, multipliziert mit der Stromzufuhrzeit), Intervall der Stromzufuhrzeit und Spannungswerts als Werte bezüglich der Erwärmungsenergie überwacht werden.

4. Bahnschweißverfahren oder Verpackungsbehälter-Herstellungsverfahren nach einem der vorhergehenden Ansprüche, bei dem verschiedene Arten von Ausgangswerten bezüglich der Erwärmungsenergie in der Weise eingestellt werden, dass sie in dem voreingestellten Bereich liegen.

5. Bahnschweißvorrichtung, die Mittel (7) zum Zusammenschweißen zweier Abschnitte einer Bahn (W) durch Erwärmen und Schmelzen beider Seiten einer Doppelbahn aufweist, **dadurch gekennzeichnet, dass** sie ferner aufweist ein Leistungsüberwachungsmittel der Schweißeinrichtung zum Überwachen von Werten bezüglich der Erwärmungsenergie zum Schweißen des Bahnmaterials und Speichermittel zum Speichern von Werten bezüglich der Erwärmungsenergie, die einer bestimmten Anzahl von Schweißoperationen der Bahn entsprechen.

6. Verpackungsbehälter-Herstellungsvorrichtung zur Herstellung von Verpackungsbehältern (P), aufweisend: Kompressionsmittel (3) zur Formung einer plattenähnliche Bahn (W) in eine röhrenförmige Bahn, Füllmittel (5) zum Füllen eines Materials in die röhrenförmige Bahn und ein Mittel zum Einschließen und Schweißen der Seite der röhrenförmigen Bahn (7), die unter dem Pegel des gefüllten Materials positioniert sind, aufweisend eine Bahnschweißvorrichtung gemäß Anspruch 5, eine Schneideinrichtung (10) zum Abschneiden des eingeschlossenen und geschweißten Abschnitts hiervon, Leistungsüberwachungsmittel der Kompressionsmittel zum Überwachen von Werten bezüglich der Erwärmungsenergie zum Einschließen und Schweißen der Seite der röhrenförmigen Bahn, positioniert unter dem Pegel des gefüllten Materials.

7. Verpackungsbehälter-Herstellungsvorrichtung nach Anspruch 6, in der eine Steuereinrichtung vorgesehen ist, die anhand der Leistungswerte der Leistungsüberwachungsmittel die verschiedenen Arten von Leistungswerten bezüglich der Erwärmungsenergie einstellt, um die Werte bezüglich der Erwärmungsenergie zum Einschließen und Schweißen der Seiten der röhrenförmigen Bahn zu überwachen, so dass sie innerhalb eines voreingestellten Bereiches liegen.

8. Steuersystem für eine Verpackungsbehälter-Herstellungsvorrichtung nach Anspruch 6 oder 7 oder Bahnschweißvorrichtung nach Anspruch 5, aufweisend die Leistungsüberwachungsmittel und Speichermittel; wobei eine Steuereinrichtung vorgesehen ist, die die verschiedenen Arten von Leistungswerten bezüglich der Erwärmungsenergie anhand der Leistungswerte der Leistungsüberwachungsmittel zur Überwachung der Werte bezüglich der Erwärmungsenergie zum Schweißen der Bahn einstellt, so dass sie innerhalb eines voreingestellten Bereiches liegen.

9. Verpackungsbehälter, erhalten durch die Vorrichtung nach einem der Ansprüche 6 oder 7 und / oder durch das Verfahren nach einem der Ansprüche 2 bis 4.

## Revendications

1. Procédé de scellage de bande comprenant les étapes consistant à sceller deux parties d'une bande (W) ensembles en chauffant et en fondant les deux côtés d'une bande double tout en les pressant, **caractérisé en ce que** le degré de l'état scellé de la bande (W) est observé en surveillant les valeurs se rapportant à l'énergie thermique pour sceller la bande et, simultanément, en mémorisant les valeurs se rapportant à ladite énergie thermique équivalente à un nombre spécifié d'opérations de scellage de la bande.

2. Procédé de production d'un conteneur d'emballage pour produire des conteneurs d'emballage (P) comprenant les étapes consistant à mouler une bande du type plat (W) en une bande tubulaire, verser un matériau liquide ou solide dans ladite bande tubulaire et enfermer et sceller le côté de la bande tubulaire positionné en dessous du niveau du matériau versé en appliquant le procédé de scellage de bande de la revendication (1) et en découpant sa partie fermée et scellée.

3. Procédé de scellage de bande selon la revendication 1, ou procédé de production de conteneur d'emballage selon la revendication 2, dans lequel dans le cas où l'énergie thermique est produite par un chauffage par induction haute fréquence, les valeurs de sortie de la valeur de courant crête, de la valeur du courant moyen, du temps d'application de courant, de la valeur d'intégration de sortie du chauffage (le carré de la valeur du courant moyen multiplié par le temps d'application de courant) l'intervalle du temps d'application du courant et la valeur de tension sont surveillés comme valeur se rapportant à l'énergie thermique.

4. Procédé de scellage de bande ou procédé de production de conteneur d'emballage selon l'une quelconque des revendications précédentes, dans lequel divers types de valeur de sortie se rapportant à l'énergie thermique sont ajustés de façon à être à l'intérieur de la plage préétablie.

5. Dispositif de scellage de bande comprenant un moyen (7) pour sceller deux parties d'une bande (W) ensemble en chauffant et en fondant les deux côtés d'une bande double **caractérisé en ce qu'**il comprend, en outre, un moyen de surveillance de sortie dudit moyen de scellage pour surveiller les valeurs se rapportant à l'énergie thermique pour sceller le matériau de bande et un moyen de mémoire pour mémoriser la valeur se rapportant à ladite énergie thermique et équivalente à un nombre spécifié d'opérations de scellage de la bande.

6. Equipement de production de conteneurs d'emballage pour produire des conteneurs d'emballage (P), comprenant un moyen de compression (3) pour mouler une bande du type plaque (W) en une bande tubulaire, un moyen de versement (5) pour le matériau dans ladite bande tubulaire, et un moyen pour fermer et sceller le côté de la bande tubulaire (7) positionnée en dessous du niveau du matériau versé comprenant un dispositif de scellage de bande selon la revendication 5, un moyen de découpe (10) pour découper sa partie fermée et scellée, un moyen de surveillance de sortie dudit moyen de compression pour surveiller les valeurs se rapportant à l'énergie thermique pour fermer et sceller le côté de la bande tubulaire positionnée en dessous du niveau du matériau versé.

7. Equipement de production de conteneurs d'emballage selon la revendication 6, dans lequel un dispositif de commande est fourni, lequel ajuste desdits divers types de valeur de sortie se rapportant à l'énergie thermique sur la base des valeurs de sortie du moyen de surveillance de sortie pour surveiller les valeurs se rapportant à l'énergie thermique pour fermer et sceller les côtés de la bande tubulaire, de façon à ce qu'ils soient à l'intérieur de la plage préétablie.

8. Système de commande pour un équipement de production de conteneur d'emballage selon la revendication 6 ou 7, ou un dispositif de scellage de bande selon la revendication 5 comprenant le moyen de surveillance de sortie est le moyen de mémoire ; dans lequel un dispositif de commande est fourni, lequel ajuste lesdits divers types de valeurs de sortie se rapportant à l'énergie thermique sur la base des valeurs de sortie du moyen de surveillance de sortie pour surveiller les valeurs se rapportant à l'énergie thermique pour sceller la bande, de façon à ce qu'il se trouve à l'intérieur de la plage préétablie.

9. Conteneur d'emballage obtenu avec l'équipement selon l'une quelconque des revendications 6 ou 7 et/ou procédé selon l'une quelconque des revendications 2 à 4.
